(19) Europäisches Patentamt
European Patent Office
Office européen des brevets

(11) **EP 1 682 879 B1**

(12) **FASCICULE DE BREVET EUROPEEN**

(45) Date de publication et mention de la délivrance du brevet:
**14.10.2015 Bulletin 2015/42**

(21) Numéro de dépôt: **04816136.8**

(22) Date de dépôt: **17.09.2004**

(51) Int Cl.:
***G01N 21/956*** *(2006.01)*

(86) Numéro de dépôt international:
**PCT/FR2004/050443**

(87) Numéro de publication internationale:
**WO 2005/026707 (24.03.2005 Gazette 2005/12)**

(54) **UTILISATION DE LA TRANSFORMEE DE FOURIER OPTIQUE POUR LE CONTROLE DIMENSIONNEL EN MICROELECTRONIQUE**

VERWENDUNG EINER OPTISCHEN FOURIER-TRANSFORMATION ZUR EINHALTUNG DER GRÖSSENTOLERANZ IN DER MIKROELEKTRONIK

USE OF OPTICAL FOURIER TRANSFORM FOR DIMENSIONAL CONTROL IN MICROELECTRONICS

(84) Etats contractants désignés:
**AT BE BG CH CY CZ DE DK EE ES FI FR GB GR HU IE IT LI LU MC NL PL PT RO SE SI SK TR**

(30) Priorité: **17.09.2003 FR 0350560**

(43) Date de publication de la demande:
**26.07.2006 Bulletin 2006/30**

(73) Titulaire: **Commissariat à l'Énergie Atomique et aux Énergies Alternatives
75015 Paris (FR)**

(72) Inventeurs:
• **PETIT, Jérôme**
**F-38700 LA TRONCHE (FR)**
• **CHATON, Patrick**
**F-38570 THEYS (FR)**
• **GRAND, Gilles**
**F-38000 GRENOBLE (FR)**
• **LEROUX, Thierry**
**F-14000 CAEN (FR)**

(74) Mandataire: **Ahner, Philippe et al
BREVALEX
95, rue d'Amsterdam
75378 Paris Cedex 8 (FR)**

(56) Documents cités:
| | |
|---|---|
| FR-A- 2 613 830 | FR-A- 2 749 388 |
| US-A- 4 735 487 | US-A- 5 241 369 |
| US-A- 5 428 442 | US-A- 6 020 957 |

EP 1 682 879 B1

**Description**

**DOMAINE TECHNIQUE ET ART ANTERIEUR**

Cette invention concerne le domaine du contrôle dimensionnel et s'applique notamment à la caractérisation géométrique de structures de petites tailles (de l'ordre du $\mu$m ou moins, par exemple comprises entre 1 $\mu$m et 10 nm) par analyse de la lumière diffractée, la scatterométrie.

Parmi les applications possibles de la présente invention, on peut citer la caractérisation de nanostructures hétérogènes réalisées généralement en technologie microélectronique comme les motifs de test (réseaux gravés) et/ou la caractérisation de structures de dépôts multicouches. Ces nanostructures peuvent être des réseaux monodimensionnels ou bidimensionnels (réseaux de plots par exemple) ou des couches simples ou des empilements de couches ou des empilements de couches et de réseaux mono ou bipériodiques.

Elle concerne aussi des structures telles que des structures biomimétiques, ou des structures de type « overlay » (réseaux superposés avec décalage).

Des méthodes connues de contrôle dimensionnel sont les méthodes de scatterométrie par ellipsométrie et par photogoniométrie.

Ces méthodes optiques sont reproductibles, assez rapides et non destructives.

Dans le cas d'une mesure sur un réseau, elles utilisent le phénomène de diffraction par un réseau et donnent ainsi des caractéristiques moyennes des lignes du réseau comme indiqué dans les références 3 et 4 citées en fin de la présente description.

L'ellipsométrie spectroscopique est une technique de caractérisation de surface qui tire profit du changement d'état de polarisation de la lumière après réflexion sur la surface. Ce changement d'état pour différentes longueurs d'onde et un angle d'incidence fixe permettent de remonter aux caractéristiques optiques de l'échantillon. Elle est par exemple décrite dans la référence 4.

La photo goniométrie est une technique de caractérisation de surface. Elle est décrite dans la référence 3, et met en oeuvre la variation de la réflectivité de l'ordre spéculaire d'un réseau en fonction de l'angle d'incidence du faisceau. On utilise également le fait que le comportement de la lumière soit différent selon les polarisations pour doubler le nombre de données utilisables.

Ces méthodes connues de métrologie optiques utilisent un faisceau lumineux monochromatique ou polychromatique.

Dans le premier cas l'angle d'incidence est le paramètre variable de la mesure finale. Dans le second cas l'angle d'incidence est fixe et la longueur d'onde variable dans la mesure finale.

Le premier cas est réalisé à l'aide d'un goniomètre dont on change la position entre chaque point de mesure, ou, plus rapidement, à l'aide d'une barette de photodiodes.

Le deuxième cas met en oeuvre un monochromateur qui balaye chaque point de mesure successivement, ou un spectrographe.

On obtient alors la signature du réseau. On peut ensuite retrouver les caractéristiques des lignes du réseau, soit en retrouvant la signature théorique la plus proche dans une bibliothèque de signatures précalculées, soit en en calculant la courbe théorique la plus proche, comme décrit par exemple dans les références 1, 2 et 4.

Ces méthodes sont relativement rapides, le temps entre le moment où l'objet est saisi et le résultat étant de quelques secondes (5 à 11 s), ce qui est compatible avec un environnement de production ; mais la quantité de données fournies n'est en général pas suffisante pour fournir une caractérisation précise des objets investigués.

Il se pose donc le problème de trouver un nouveau procédé et un nouveau dispositif permettant de déterminer des caractéristiques dimensionnelles et/ou structurelles d'objets, par exemple du type réalisés en microélectronique, de préférence en un temps compatible avec un environnement de prodution de tels objets et fournissant suffisamment de données.

Par ailleurs, un autre problème est que les dispositifs classiques d'ellipsométrie et de goniométrie utilisent des bras de mesures encombrants et mettent en oeuvre des pièces mécaniques mobiles.

Or, dans un domaine tel que la microélectronique ou dans le domaine des nanostructures, en particulier dans un environnement de production, l'encombrement et/ou la simplicité d'un système de contrôle sont des paramètres importants.

Les documents d'art anterieur suivants montrant la formation d'une image de la transformée de Fourier optique: FR 2 749 388, FR2 613 830, US 6 020 957, US 5 428 442, US 4 735 487 et US 5 241 369.

**EXPOSE DE** L'INVENTION

L'invention vise à résoudre ce problème.

L'invention est definie dans les revendications indépendantes 1 et 18.

L'invention a pour objet un système optique, un dispositif et un procédé permettant de déterminer les caractéristiques structurelles d'un objet.

L'invention concerne un dispositif pour la mesure de caractéristiques dimensionnelles et/ou structurelles d'un objet, comportant :

- d es moyens pour former une image de la transformée de Fourier optique d'une surface élémentaire de l'objet,

- des moyens de traitement pour produire des données concernant au moins une caractéristique dimensionnelle et/ou structurelle de l'objet, ou pour identifier une telle caractéristique, à partir d'informations fournies par les moyens de détection.

L'invention met donc en oeuvre une transformée de Fourier optique de la lumière, ou d'un rayonnement, diffusé ou diffracté par l'objet ou l'échantillon examiné.

Les moyens pour former une image de la transformée de Fourier optique d'une surface élémentaire de l'objet sont des moyens pour former une image de cette transformée de Fourier optique dans un plan focal image de Fourier.

Le dispositif comporte des moyens pour définir la géométrie de ladite surface élémentaire.

De préférence, ces moyens permettent de définir cette surface élémentaire indépendamment de l'ouverture numérique des moyens pour former une image de la transformée de Fourier optique d'une surface de l'objet.

Le dispositif comporte des moyens de transfert pour former l'image de la transformée de Fourier optique de la surface élémentaire sur des moyens de détection.

Selon l'invention on utilise donc la technique de transformée de Fourier optique (TFO) pour une application de caractérisation de structures, en particulier de nanostructures, de tailles caractéristiques comprises par exemple entre 1 $\mu$m et 10 nm.

La TFO permet d'obtenir, en une seule acquisition, une réponse de l'objet illuminé. La mesure est donc très rapide et une seule mesure donne une très grande quantité d'information alors que les autres méthodes sont limitées en quantité d'informations.

Le système selon l'invention est en outre peu encombrant et ne met en oeuvre quasiment pas de pièces mécaniques mobiles, ce qui simplifie son utilisation.

Une source de rayonnement pour illuminer l'objet sera de préférence une source spatialement non cohérente, monochromatique ou de faible largeur spectrale, de préférence inférieure à 10 nm.

La puissance de cette source sera fonction du temps de mesure et de la géométrie choisie de la surface élémentaire. De préférence elle est comprise entre 100 mW et 500 mW.

Le système pourra comporter un dispositif de contrôle de polarisation avant et après réflexion sur la face de l'échantillon.

Les moyens de traitement mettent par exemple en oeuvre un calcul RCWA.

Ils peuvent aussi effectuer un calcul d'une distribution d'intensité réfléchie théorique, pour une lumière incidente donnée et des caractéristiques dimensionnelles et/ou structurelles données de l'objet, puis une comparaison de cette distribution théorique avec une distribution d'intensité réfléchie et une modification des caractéristiques dimensionnelles et/ou structurelles données de l'objet si le résultat de la comparaison n'est pas satisfaisant.

L'invention concerne également un procédé de mesure de caractéristiques dimensionnelles ou structurelles d'un objet dont la surface est illuminée par un rayonnement.

L'invention concerne également un procédé de mesure de caractéristiques dimensionnelles ou structurelles d'un objet dont la surface est illuminée par un rayonnement, comportant :

- former une image de la transformée de Fourier optique d'une surface élémentaire de l'objet sur des moyens de détection,
- traiter des données fournies par les moyens de détection de manière à produire au moins une donnée concernant au moins une caractéristique dimensionnelle et/ou structurelle de l'objet.

**BREVE DESCRIPTION DES FIGURES**

Les figure s 1 A et 1B représente nt un mode de réalisation de l'invention,

les figures 2A et 2B sont des exemples de masque pouvant être utilisées dans le cadre de la présente invention,
la figure 3 est un schéma synoptique d'un procédé de caractérisation,
la figure 4 représente le résultat de l'illumination globale d'un réseau avec un dispositif selon l'invention,
les figures 5A et 5B représentent le résultat de l'illumination d'un réseau avec un dispositif selon l'invention, muni de deux masques différents,

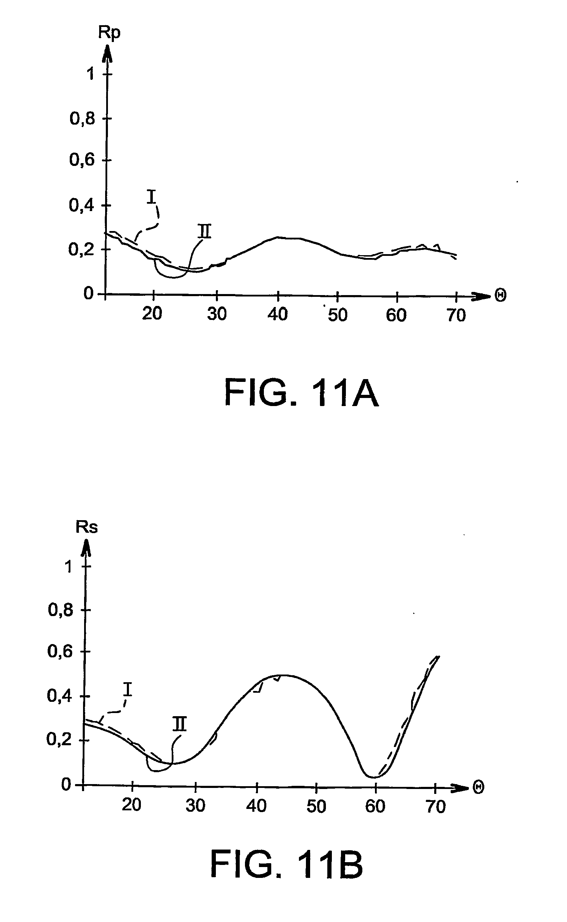

les figures 6A à 13C sont des exemples comparatifs.

## EXPOSÉ DETAILLE DE MODES DE REALISATION DE L'INVENTION

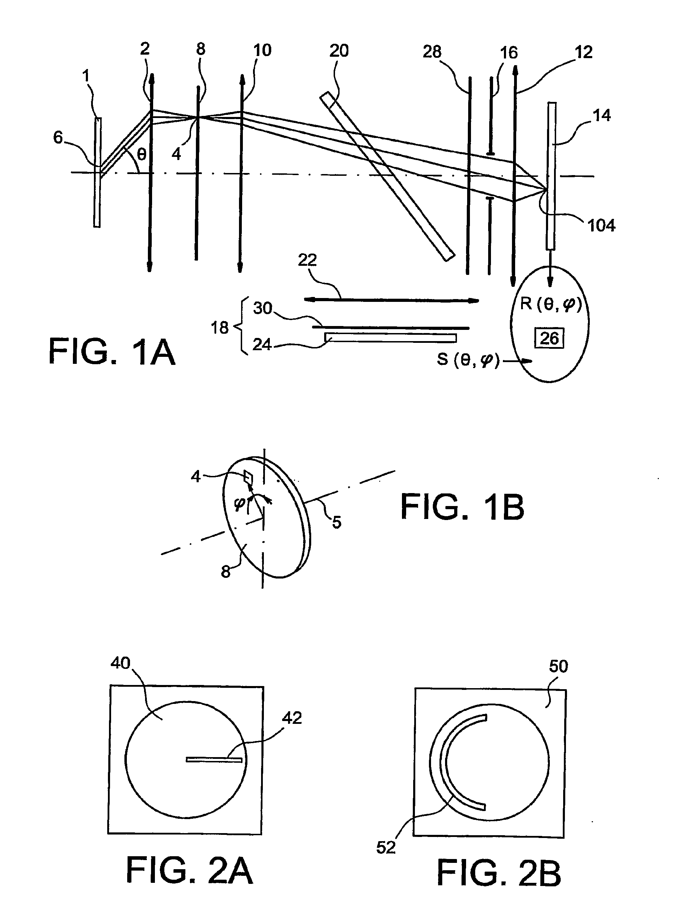

Un mode de réalisation de l'invention est illustré en figure 1A.

Un objectif de mesure 2 permet de former l'image de la transformée de Fourier 4 d'une surface élémentaire 6 d'un objet 1 dans son plan focal image 8.

Cette surface est éclairée à l'aide d'une source de rayonnement 24, et elle peut être définie par des moyens, par exemple un diaphragme, pour limiter la zone de mesure.

La transformée de Fourier optique (TFO) est une méthode optique permettant d'imager la réponse angulaire d'un échantillon à une excitation lumineuse.

Selon l'invention on visualise la transformée de Fourier angulaire de la lumière réfléchie ou diffractée par un échantillon.

L'objet 1 est par exemple un réseau monodimensionnel ou bidimensionnel (par exemple un réseau de plots) ou un empilement de couches ou une combinaison d'un empilement de couches et d'un ou de plusieurs réseaux mono ou bipériodiques. Il peut aussi s'agir d'une monocouche dont on cherche à identifier l'épaisseur ou l'indice.

Les grandeurs caractéristiques de ces structures sont comprises de préférence :

- pour des réseaux, entre 1 $\mu$m ou 500 nm ou 100 nm et 50 nm ou entre 50 nm et 10 nm,
- et, pour des couches entre 100 $\mu$m et 10 nm ou même 1 nm.

Un objectif de transfert forme ensuite l'image de la transformée de Fourier de la surface élémentaire 6 sur un capteur 14 formé de détecteurs. Ce capteur 14 est par exemple une caméra CCD. Il permet de capter l'intensité émise par une zone élémentaire 6, suivant chaque direction d'émission repérée par le couple $(\theta,\varphi)$ comme illustré sur les figures 1A et 1B.

Dans le plan focal image 8 (figure 1B) la distance entre l'axe optique 5 et la zone 4 où se concentrent les ondes planes émises depuis la zone 6 selon l'angle $\theta$ est proportionnelle à $\theta$. L'azimut $\varphi$ correspond à la direction azimutale d'émission depuis cette zone 6.

L'utilisation d'une caméra CCD permet d'acquérir, en une seule acquisition, autant de données que de pixels illuminés de la caméra CCD.

L'objectif de transfert comporte par exemple un couple de lentilles 10, 12. La lentille 10 peut être une lentille de champ qui donne une image réelle au voisinage du plan d'un diaphragme 16 ou dans ce plan.

Ce diaphragme permet de définir l'ouverture de la surface élémentaire 6. Il a par exemple un diamètre supérieur à 20 $\mu$m ou compris entre 20 $\mu$m ou 40 $\mu$m et 500 $\mu$m, par exemple égal à environ 300 $\mu$m. Ce diaphragme est situé dans ou au voisinage d'un plan conjugué du plan de l'objet 1.

Ce diaphragme peut être remplacé par tout moyen optique, par exemple un redimensionnement des optiques, permettant de limiter la zone éclairée de l'échantillon.

Ce diaphragme ou ce moyen optique permet d'ajuster la taille de la surface analysée 6, indépendamment de l'ouverture angulaire (angle maximum des rayons que peut collecter le dispositif), ou numérique du dispositif (cosinus de cet angle).

Il est ainsi possible de définir des tailles de surface élémentaire suffisamment grandes pour inclure de très nombreux motifs élémentaires du réseau (taille de la zone ou de la surface 6 supérieure à 20 $\mu$m, alors que les motifs élémentaires peuvent être aussi petits que quelques nm, par exemple compris entre 10 nm et 50 nm), par exemple une ou plusieurs centaines de motifs élémentaires, et donc de s'assurer que le phénomène de diffraction est efficace même si l'ouverture angulaire du dispositif est très grande (jusqu'à $\pm$ 80° ou $\pm$ 88°).

Le dispositif met donc en oeuvre un système optique comportant un premier objectif 2, un diaphragme (ou des moyens optiques permettant de limiter la zone éclairée de l'échantillon ou la surface élémentaire 6), et un deuxième objectif (de transfert).

Il est possible, grâce à ce dispositif, d'ajuster de manière indépendante la taille du spot sur la surface 1 (grâce au diaphragme ou moyens équivalents) et l'ouverture numérique du premier objectif 2.

On peut donc mesurer selon un angle important (jusqu'à 88°) sur une surface éclairée de taille raisonnable, par exemple de diamètre de l'ordre de 25 $\mu$m ou compris dans l'une des gammes déjà indiquées ci - dessus).

Selon un mode de réalisation, un dispositif selon l'invention met en oeuvre :

- un premier objectif, ou des moyens formant un premier objectif convergent, pour former l'image de la TF d'une zone élémentaire d'un objet, dans le plan focal image du premier objectif,
- un second objectif convergent ou des seconds moyens formant un second objectif convergent, pour projeter ou transférer cette image vers ou sur un détecteur bidimensionnel,

- des moyens, pouvant être situés à proximité du deuxième objectif, pour diaphragmer ou définir une surface élémentaire ; de préférence ces moyens peuvent être ajustés indépendamment de l'ouverture numérique ou angulaire du premier objectif ou des moyens formant un premier objectif.

L'illumination peut se faire à partir d'un plan de Fourier 18, décalé de l'axe de l'appareil par un plan semi-transparent 20. Chaque point de la surface de ce plan de Fourier correspond ainsi à un angle d'incidence et à un azimut sur l'échantillon testé.

La lentille 22 joue le même rôle que la lentille 12 dans le cas du chemin direct.

La source de rayonnement 24 est de préférence, du point de vue spatial, non cohérente ou faiblement cohérente, afin d'éliminer le phénomène de tavelures, ou de « speckle ». Ce dernier est un phénomène d'interférence des points de la source, qui brouille de façon aléatoire les mesures. Il existe une nette différence de qualité de signal entre des mesures effectuées avec « speckle » et sans « speckle ».

Cette source est avantageusement une source étendue disposée dans un plan conjugué du plan de Fourier pour former un plan de Fourier d'illumination.

La source est de préférence de forte puissance (puissance par exemple comprise entre 100 mW et 500 mW), de manière à permettre une illumination de l'échantillon via le diaphragme. Mais cette puissance dépendra de la géométrie choisie pour chaque surface élémentaire à illuminer, de manière à réaliser une mesure en un temps de mesure choisi, par exemple inférieur à 1 seconde.

Enfin, elle est de préférence monochromatique ou de faible largeur spectrale, inférieure à 10 nm.

Cette source peut être un laser (par exemple un laser NdYAG doublé à 532 nm) fonctionnant en continu, décohéré (par exemple à l'aide d'une lame dépolie tournante), ou une série de diodes super-luminescentes ou de diodes laser.

Des moyens de calcul 26 permettent de traiter des données reçues sur le capteur 14 et mettent en oeuvre un procédé de traitement des données. Ces moyens comportent par exemple un micro-ordinateur spécialement programmé pour mettre en oeuvre un tel procédé. Ce procédé permet de retrouver les caractéristiques dimensionnelles et/ou de structure de l'objet examiné 1 et sera détaillé par la suite.

Avantageusement le dispositif comporte un polariseur 28 permettant de sélectionner la polarisation de la lumière diffractée.

En outre, l'utilisation d'un masque 30 dans le plan de Fourier de l'illumination permet de sélectionner les angles $(\theta,\varphi)$ d'illumination.

Selon un exemple, illustré sur la figure 2A, un masque 40 présente une fente 42 permettant de réaliser une mesure dite « en théta », par exemple avec un angle $\theta$ compris entre quelques degrés et quelques dizaines de degrés, par exemple entre 8° et 80° ou 88°.

Selon un autre exemple, illustré sur la figure 2B, un masque 50 présente une fente 52 en arc de cercle, permettant de réaliser, pour un angle $\theta$ donné, une mesure purement azimutale, dite « en phi », par exemple avec un angle $\varphi$ compris entre 0° et 180°, pour un angle $\theta$ égal ici à environ 70°.

D'autres formes de masques sont possibles.

L'utilisation de masques permet une illumination sélective de la surface de l'objet, par séléection des angles $\theta$ et/ou $\varphi$.

L'invention permet donc notamment une mesure à partir d'une illumination d'azimut $\varphi$ fixe ou variable, ou comprise entre deux valeurs limites, l'angle $\theta$ étant lui-même fixe ou bien variable ou compris entre deux valeurs limites (par exemple entre 0 et 80° ou 88°).

Un intérêt de pouvoir sélectionner des zones à angle $\theta$ élevé (jusqu'à 80° ou 88° par exemple) est que ces zones sont des zones de forte sensibilité.

Un polariseur peut également être prévu à l'entrée du dispositif.

Des moyens pour illuminer un échantillon peuvent donc comporter :

- un dispositif de séparation de faisceau tel qu'un miroir ou un cube séparateur,
- un objectif (le troisième si le dispositif comporte déjà deux objectifs comme indiqué ci-dessus), pour réimager l'image de la TF sur un second plan, dit plan de Fourier d'illumination,
- éventuellement un masque, pour sélectionner des angles d'illumination sur l'échantillon,
- une source de lumière dans le plan de Fourier d'illumination, qui éclaire de préférence l'ensemble du plan de Fourier.

Un contrôle très souple de l'échantillon peut être obtenu avec ces moyens.

La réponse du détecteur 14 est ensuite traitée afin d'extraire les données permettant la caractérisation de l'objet 1 en termes de dimension et/ou de structure.

Il peut s'agir par exemple d'une dimension suivant une direction non parallèle au plan de l'objet 1, ou perpendiculaire à ce plan, par exemple l'épaisseur d'une couche de silicium.

Il peut aussi s'agir de la détermination des caractéristiques structurelles d'un réseau bidimensionnel, par exemple d'une structure biomimétique.

La caractérisation va donc permettre de déterminer des caractéristiques de reliefs et/ou de dimensions de certaines structures.

L'invention met en oeuvre une technique d'analyse dite RCWA, ou « Rigourous Coupled Wave Analysis ». Une technique de ce type est décrite dans les références 3 et 4.

Cette méthode permet d'obtenir quatre paramètres ou données : $R_{SS}$ (coefficient de réflexion d'une polarisation S la direction S étant définie par le polariseur 28), $R_{PP}$ (coefficient de réflexion d'une polarisation P perpendiculaire à S), $R_{SP}$ (coefficient de couplage, après réflexion, d'une polarisation S sur la polarisation P), $R_{PS}$ (coefficient de couplage, après réflexion, d'une polarisation P sur la polarisation S).

On exploite, dans le cadre de la présente invention, non pas ces quatre données, mais les données $P_0$ et $P_{90}$, qui sont des intensités normalisées de polarisations obtenues à partir de $R_{PP}$, $R_{SS}$, $R_{SP}$ et $R_{PS}$ selon les formules :

$$P0 = \left| cos(\varphi).R_{pp} + sin(\varphi).R_{sp} \right|^2 + \left| cos(\varphi).R_{ps} + sin(\varphi).R_{ss} \right|^2$$

$$P90 = \left| cos(\varphi).R_{sp} - sin(\varphi).R_{pp} \right|^2 + \left| cos(\varphi).R_{ss} - sin(\varphi).R_{ps} \right|^2$$

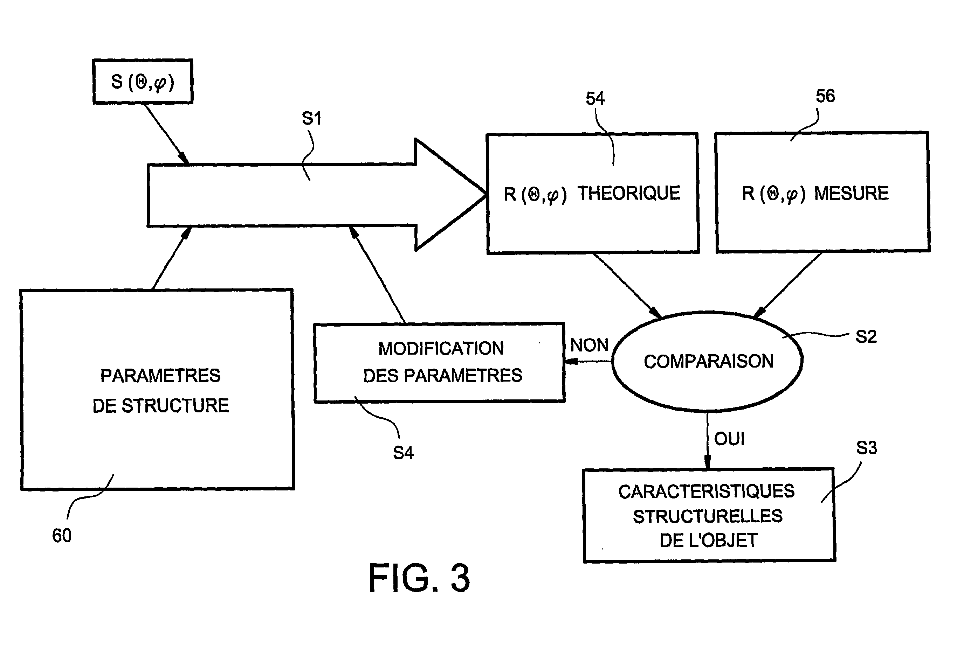

La figure 3 est une représentation des étapes d'un procédé de traitement des données selon l'invention.

Des données $S(\theta,\varphi)$ concernant la lumière incidente sont soumises, avec des paramètres 60 approximatifs de la structure (par exemple hauteur et/ou largeur des traits ou lignes d'un réseau et/ou pente des flans de ces traits ou lignes, et/ou épaisseur de la ou des couches, indice du ou des matériaux), à un traitement par méthode RCWA (étape S1). Ce calcul théorique fournit une signature $R(\theta,\varphi)$ théorique, qui représente la lumière réfléchie théoriquement mesurée sur le capteur. $R(\theta,\varphi)$ est composée, dans le cas d'un réseau, de la réflexion spéculaire $R_0$ et des ordres diffractés $R_n$ :

$$R(\theta,\varphi) = R_0(\theta,\varphi) + \sum_n R_n(\theta,\varphi) \, .$$

La signature théorique, ou distribution d'intensité, qui résulte du calcul est comparée (étape S2) à la signature 56 mesurée de la lumière réfléchie. La comparaison est par exemple effectuée à l'aide d'une méthode de régression, comparant la signature théorique et la signature mesurée, par exemple en $\varphi$, des intensités $P_0$ et $P_{90}$ (obtenues en orientant un analyseur placé devant les moyens 14 de détection).

Si l'accord obtenu selon ce critère est bon, les caractéristiques 60 introduites dans le calcul RCWA (S3) peuvent être considérées comme les caractéristiques de l'objet mesuré 1.

Si l'accord obtenu selon ce critère n'est pas bon, les paramètres 60 sont modifiés (étape S4), et il est procédé à un nouveau calcul RCWA jusqu'à l'obtention d'un accord satisfaisant.

En d'autres termes, des profils de $P_0$ et $P_{90}$ peuvent être établis en fonction de l'azimuth $\varphi$ et/ou de l'angle $\theta$ et comparés à des profils $P_0$ et $P_{90}$ pour une structure théorique. Une, ou des, caractéristique(s) de la structure théorique (par exemple : pas du réseau ou épaisseur des couches) peuvent être progressivement modifiées (étape S4) pour que le profil théorique s'approche du profil mesuré. Lorsqu'un accord satisfaisant est obtenu, les caractéristiques structurelles de l'objet peuvent être identifiées.

Dans certains cas on pourra aussi utiliser les profils des coefficients $R_{PP}$ et $R_{SS}$ en fonction de $\theta$, le traitement des données étant le même que celui exposé ci-dessus. C'est notamment le cas lors de la caractérisation de l'épaisseur d'une monocouche.

L'invention apporte un certain nombre d'avantages.

Tout d'abord, la mesure est rapide (environ 300 ms) et permet de fournir suffisamment d'informations. Une seule acquisition est même nécessaire avec une caméra CCD 14 qui fait l'image de la transformée de Fourier. L'utilisation d'une caméra CCD permet en outre de réaliser un traitement parallèle des données, et non pas successif comme avec un capteur classique.

On obtient donc une très grande quantité d'informations et l'acquisition n'est plus un facteur limitant lors de la caractérisation.

L'invention permet en outre de recueillir une très grande quantité d'information en une seule acquisition, beaucoup plus que par les procédés classiques. Par exemple, elle permet de caractériser les ordres diffractés et ainsi d'en tirer des informations supplémentaires (rugosité de surface, etc...). La rugosité latérale peut aussi être déduite de la lumière diffusée en dehors de l'ordre spéculaire et des ordres de diffraction sur lesquels elle apparaît comme un effet de second ordre.

En termes d'encombrement, l'instrument peut être réduit à un volume de l'ordre de quelques dm³, car il est juste constitué d'une source 24, d'éléments d'optiques et d'un détecteur 14. Les dispositifs d'ellipsométrie et de goniométrie classique utilisent des bras de mesures encombrants. Dans un domaine tel que la microélectronique ou dans le domaine des nanostructures, ce paramètre est important. Il faut ajouter la quasi-absence de pièces mécaniques mobiles.

L'invention permet un accès aux données goniométriques azimutales : la mesure en φ donne des informations pertinentes pour la caractérisation de structures tridimensionnelles (notamment dans le cas de réseaux de plots, ou de membranes biomimétiques) ou asymétriques.

L'utilisation de données goniométriques présente en outre l'avantage, par rapport aux données ellipsométriques, de ne pas nécessiter la connaissance de la courbe de dispersion des matériaux.

De plus, on peut, en faisant varier l'azimut φ, faire varier la période apparente et ainsi mesurer des réseaux de plus petit pas.

Par ailleurs, la possibilité de collecter tous les angles d'incidence mais aussi tous les azimuts permet de mesurer simultanément toutes les orientations de polarisation, ce qui permet de récupérer l'ensemble des ordres de diffraction et d'obtenir une meilleure sensibilité.

A cela s'ajoute la possibilité d'effectuer des mesures avec différentes longueurs d'onde. Pour cela différentes sources peuvent être utilisées, et notamment un laser (par exemple à 532 nm ou à 633 nm), ou une source blanche (par exemple une lampe au xénon) munie d'un filtre interférentiel, ou une matrice de diodes super-luminescentes, ou des diodes laser.

Le tableau I ci-dessous récapitule des données relatives à un procédé selon l'invention (TFO), à un procédé par ellipsométrie (technique « multi-spectrale », mettant en oeuvre plusieurs longueurs d'onde et, pour chaque longueur d'onde, la réflexion est mesurée) et à un procédé « classique » (avec un ellipsomètre très performant, une seule longueur d'onde par mesure et plusieurs mesures successives).

**Tableau I**

| Méthode | T.F.O. | Multi-spectrale | Classique |
|---|---|---|---|
| Temps d'une mesure | 300 ms | 100 ms | quelques ms |
| Nombre de mesure | 1 | 1 | 200 |
| Temps total de l'acquisition | 300 ms | 100 ms | De 500 ms à 2 s |
| Capteur | Caméra CCD 1Mpixels | Barrette CCD | Cellule photosensible |
| Nombre de données | 1 million | > 500 | 200 |

Il apparaît clairement que le procédé selon l'invention permet d'obtenir un nombre de données beaucoup plus important que les procédés connus.

L'invention peut être associée à une unité de fabrication de composants tels que ceux réalisés en microélectronique. L'objet 1 provient de cette unité de production, passe devant un dispositif tel que celui décrit ci-dessus en liaison avec les figures, les moyens 26 de traitement de données comportant par exemple un micro-ordinateur et étant spécialement programmés pour mettre en oeuvre un procédé de traitement tel que décrit ci-dessus. Un opérateur peut ainsi avoir le résultat de l'analyse sur le lieu même de production et modifier cette dernière en conséquence si l'analyse indique des caractéristiques dimensionnelles et/ou structurelles différentes de celles prévues.

Des moyens optiques pouvant être mis en oeuvre dans le cadre de l'invention sont également décrits dans FR 2 613 830 et US - 5 880 845.

Des exemples de mesures effectuées avec un procédé selon l'invention vont maintenant être donnés.

**Exemple 1 : exemple de Mesure globale**

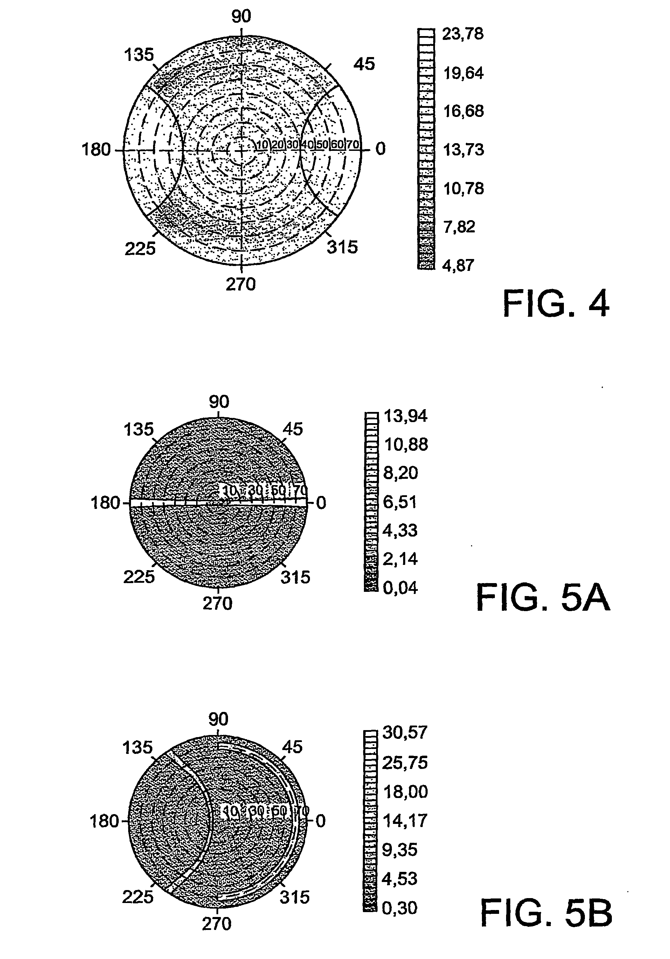

La figure 4 représente le résultat de l'illumination globale d'un réseau, le disque représentant la surface des angles azimutaux (φ de 0 à 360°) et radiaux (θ de 0 à 80°), le niveau de gris représentant l'intensité lumineuse diffractée.

Cette mesure montre la très grande quantité de données obtenues en une seule acquisition, ce nombre étant seulement limité par le nombre de capteurs élémentaires du détecteur 14 ; un détecteur comportant comportant approximativement 1 million de pixels, par exemple une caméra CCD classique, permet d'acquérir 1 million de données (contre 200 classiquement pour une autre méthode, voir tableau I ci-dessus).

**Exemples 2 - 1 - 2 - 8 : exemples de Mesures sélectives.**

Comme énoncé précédemment, un des intérêts de l'invention est l'utilisation de masques sélectifs permettant de sélectionner les données strictement nécessaires.

Les figures 5A et 5B montrent des résultats de mesures sélectives effectuées respectivement avec les masques des figures 2A et 2B, sur des réseaux de résine gravé. La longueur d'onde de la source est ici de 532 nm.

D'une manière générale, l'apparition d'ordres autres que l'ordre spéculaire apporte des informations supplémentaires qu'on ne peut avoir avec d'autres méthodes de scatterométrie. Les caractéristiques données dans les exemples suivants ont néanmoins été réalisées avec l'ordre spéculaire. On utilise les définitions suivantes :

f : facteur de remplissage = largeur des lignes du réseau ;

H : hauteur des lignes

GOF : «goodness of fit», ou facteur de mérite, calculé en fonction de $X^2$ (GOF=1-$X^2$), $X^2$ étant l'erreur entre la simulation et la mesure ($X^2=(P_{0exp}-P_0)^2+(P_{90exp}-P_{90})^2$). Le coefficient GOF se rapproche d'autant plus de 1 que la régression est bonne.

**Exemple 2-1 :**

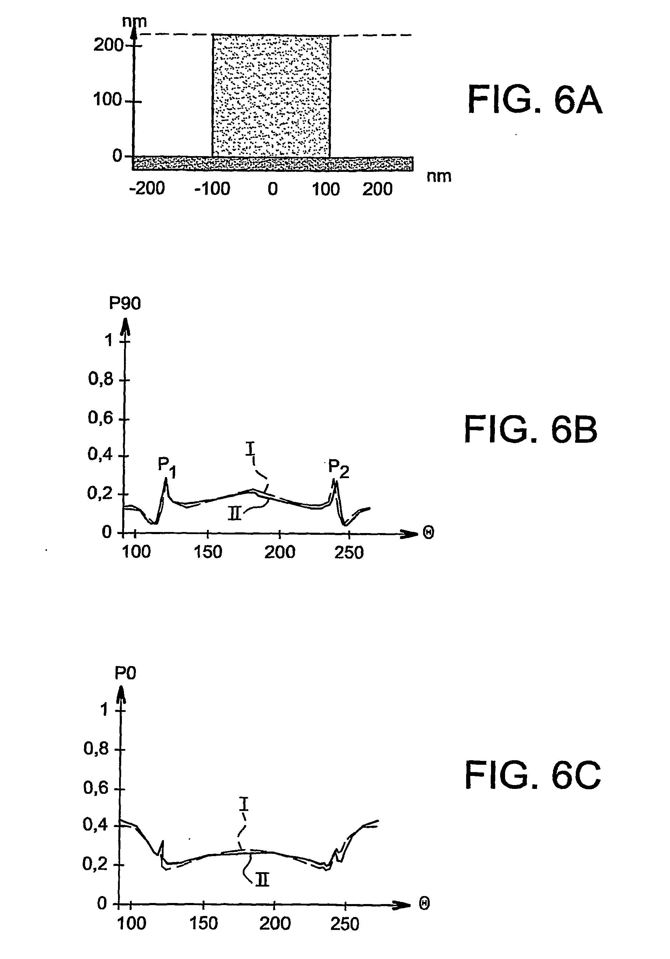

Cet exemple est illustré sur les figures 6A à 6C. Il concerne la caractérisation d'un réseau de résine dont le profil est illustré en figure 6A. Ce réseau a, en théorie, une largeur de ligne de 250 nm pour une période de 500 nm (250/500 nm). Cette mesure a été réalisée pour $\theta$ = 70° et avec deux polariseurs différents. Les figures 6B et 6C représentent respectivement les variations de $P_{90}$ et de $P_0$ en fonction de $\varphi$, la courbe I étant la courbe simulée, la courbe II la courbe de mesure. Sur ces deux figures apparaissent nettement deux pics $P_1$, $P_2$ de résonance du réseau. Un accord, lui aussi très net, apparaît entre les deux courbes I et II.

$$f(1) = 212.2 ; h(1) = 223.9$$

$$GOF(x2) = 0.99983$$

**Exemple 2-2** :

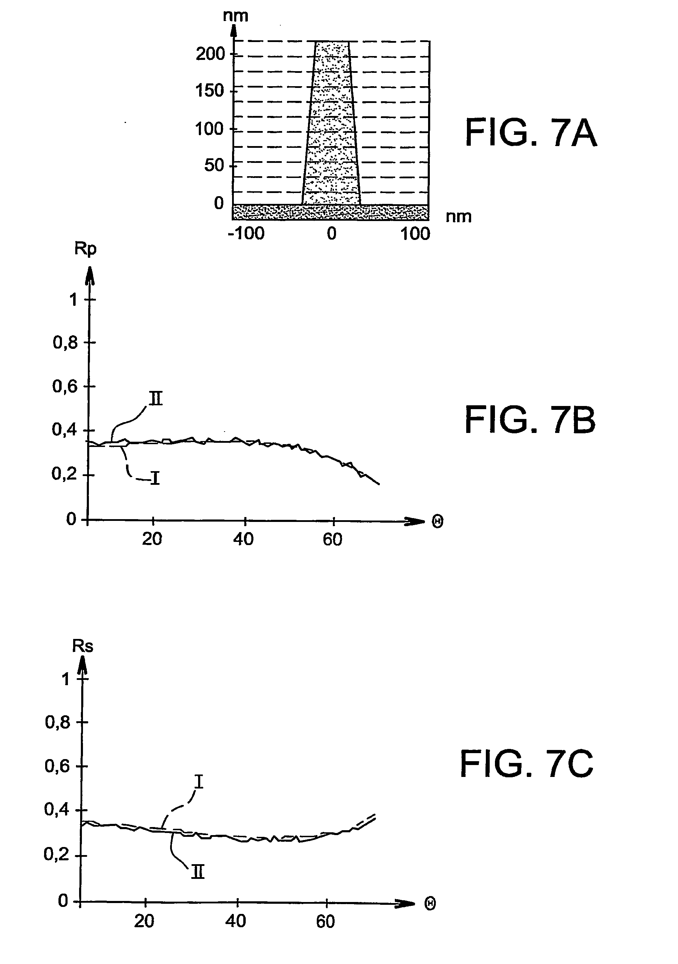

Cet exemple est illustré sur les figures 7A à 7C et concerne la caractérisation d'un réseau de résine avec une largeur de 70 nm et une période de 240 nm (dont le profil est représenté sur la figure 7A). Cette mesure a été réalisée pour $\varphi$ = 0° et $\theta$ variant de 8 à 68°. Sur les figures 7B et 7C, représentant respectivement les variations de $R_P$ et de $R_S$ en fonction de $\varphi$, la courbe I est la courbe simulée, et la courbe II la courbe de mesure. De la comparaison de ces deux figures avec les figures 6B et 6C il apparaît clairement que la sensibilité et la précision obtenues sont meilleures avec l'utilisation des paramètres $P_0$ et $P_{90}$.

$$f(1) = 53.8 ; h(1) = 212.1; theta (1) = 86.5$$

$$GOF(x^2) = 0.99997$$

**Exemple 2-3 :**

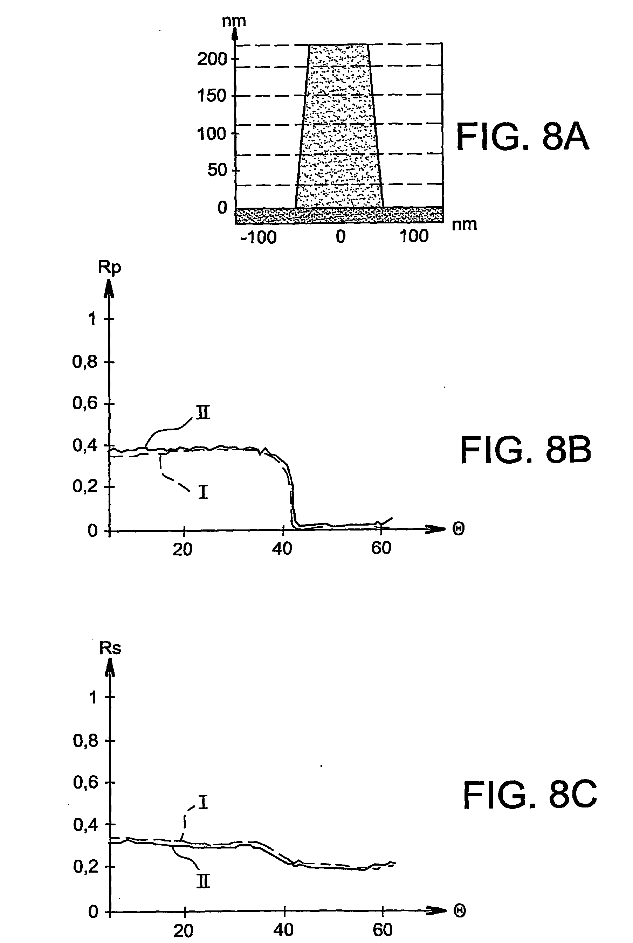

Cet exemple est illustré sur les figures 8A à 8C et concerne la caractérisation d'un réseau de résine de largeur 130 nm et de période 320 nm ; cette mesure a été réalisée pour $\varphi$ = 0° et $\theta$ variant de 8 à 62°.

Sur les figures 8B et 8C, les courbes $R_P$ et $R_S$ sont données en fonction de $\theta$. La courbe de mesure est la courbe II et la courbe théorique la courbe I.

Cet exemple montre un bon accord entre courbe mesurée et courbe théorique. Cependant, là encore, la précision est meilleure avec $P_0$ et $P_{90}$.

$$f(1) = 108.7 ; h(1) = 221.9 ; theta (1) = 87.9$$

$$GOF(x^2) = 0.99988$$

**Exemple 2-4 :**

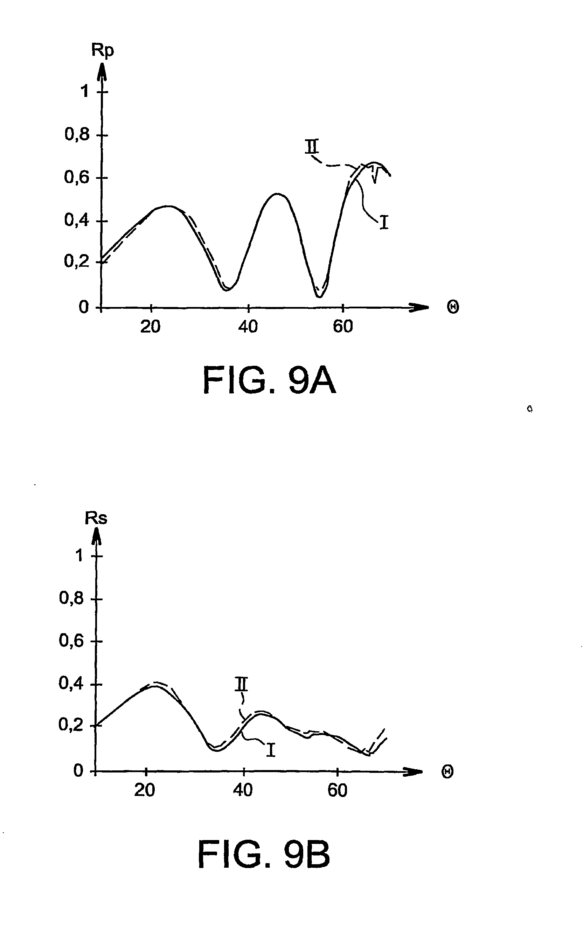

Cet exemple est illustré sur les figures 9A et 9B et concerne la caractérisation d'un bicouche de nitrure de silicium (142 nm) sur de la silice (1870 nm). Le substrat est du silicium.

Sur les figures 9A et 9B, les courbes Rp et $R_S$ sont données en fonction de $\theta$. La courbe de mesure est la courbe II et la courbe théorique la courbe I.

Cet exemple montre que l'invention permet d'identifier des épaisseurs d'une structure multicouche.

$$h(1) = 1853.4 \; ; \; h(2) = 155.5 \; ;$$

$$GOF(x^2) = 0.99989$$

**Exemple 2-5 :**

Cet exemple est illustré sur les figure s 10A et 10B et concerne la caractérisation d'une monocouche de silice (10 $\mu$m), le substrat étant du silicium.

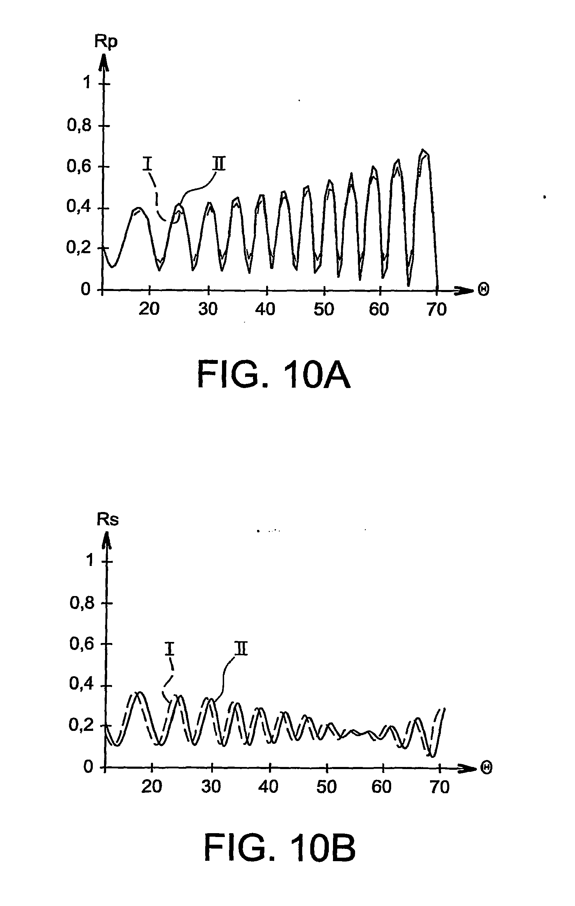

Sur les figures 10A et 10B, les courbes $R_P$ et $R_S$ sont données en fonction de $\theta$. La courbe de mesure est la courbe II et la courbe théorique la courbe I.

Cet exemple, ainsi que le suivant, montrent que l'invention permet d'identifier l'épaisseur d'une couche unique de forte épaisseur (supérieure à 2 $\mu$m ou 3 $\mu$m). Une telle caractérisation est très difficile à réaliser par ellipsométrie.

$$h(2) = 9869.3 \; ;$$

$$GOF(x^2) = 0.99936$$

**Exemple 2-6 :**

Cet exemple est illustré sur l es figure s 11A et 11B et concerne lui aussi une structure monocouche, en l'espèce d'une monocouche de silice (1248 nm), sur un substrat de silicium.

$$h(2) = 1242.6 \; ;$$

$$GOF(x^2) = 0.99991$$

**Exemple 2-7 :**

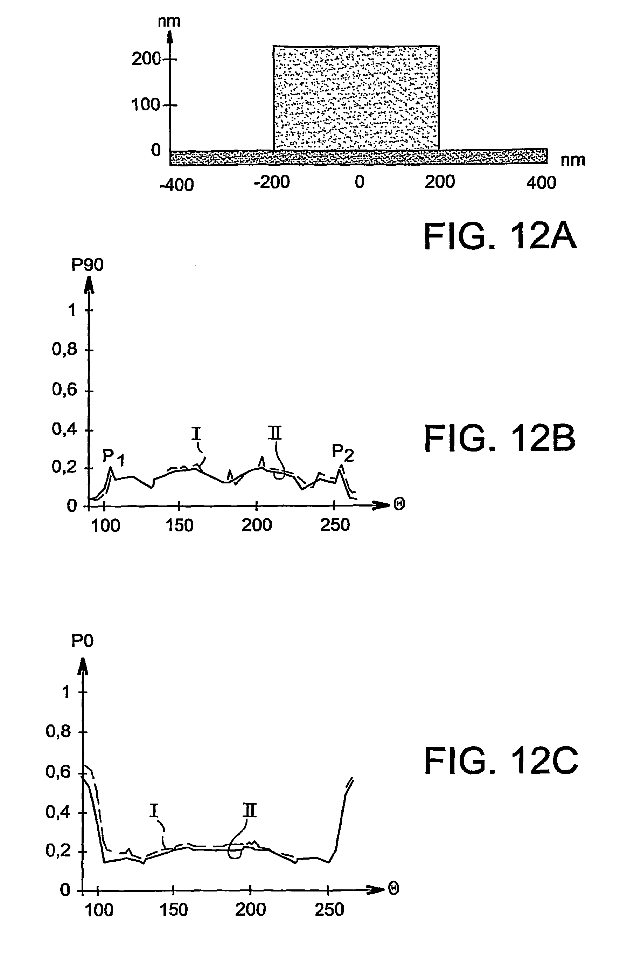

Cet exemple est illustré sur les figures 12A à 12C et concerne la caractérisation d'un réseau de résine de largeur théorique 400 nm pour une période théorique de 800 nm. La mesure a été réalisée sur un échantillon de diamètre 150 $\mu$m pour $\theta = 70°$, avec deux polariseurs différents (pour $P_0$ et $P_{90}$). Les figures 12B et 12C représentent $P_{90}$ et $P_0$ en fonction de $\varphi$.

On retrouve les deux pics $P_1$, $P_2$ caractéristique de la résonance du réseau.

$$f(1) = 358.7 \; ; \; h(1) = 228.7 \; ;$$

$$GOF(x^2) = 0.99947$$

**Exemple 2-8 :**

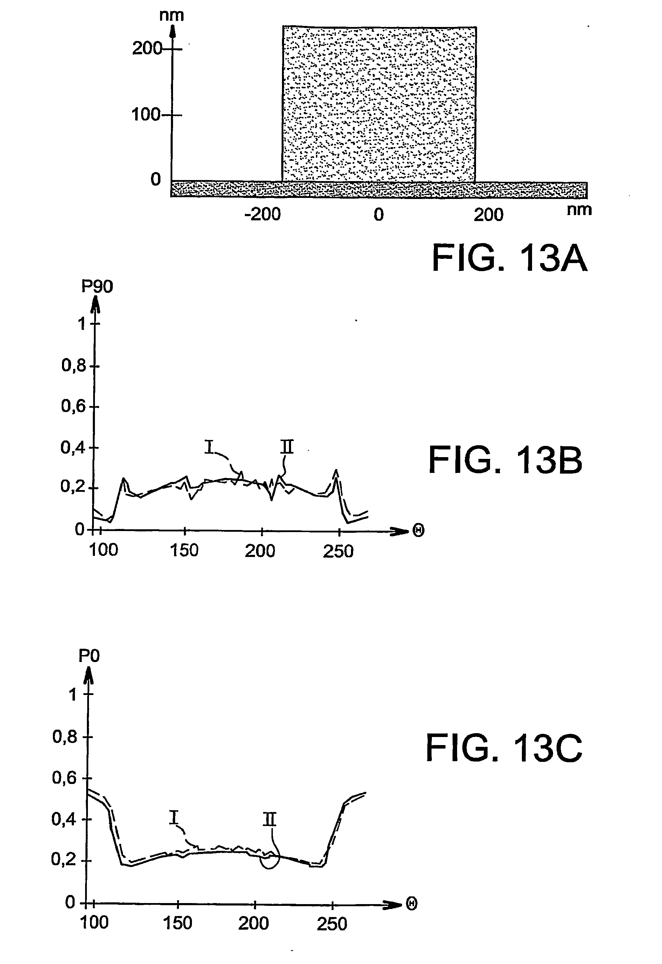

Cet exemple est illustré sur les figures 13A à 13C et concerne la caractérisation d'un réseau de résine de largeur théorique 300 nm pour une période théorique de 600 nm. La mesure a été réalisée sur un échantillon de diamètre 150 $\mu$m (pour $\theta$ = 70°). Les figures 13B et 13C représentent $P_{90}$ et $P_0$ en fonction de $\varphi$. On retrouve encore les deux pics $P_1$, $P_2$ caractéristique de la résonance du réseau.

$$f(1) = 276.4 \; ; \; h(1) = 229.9 \; ;$$

$$GOF(x^2) = 0.99966$$

REFERENCES

1. M. G. Moharam, T. K Gaylord, Erk B. Grann, Drew A. Pommet, Formulation for stable and efficient implementation of the rigourous coupled-wave analysis of binary gratings. Journal Optical Society of America, 1995. 12(5): p. 1068-1076.
2. M. Nevière, E. Popov, Grating Electromagnetic Theory User Guide. Journal of imaging science and technology, 1997. 41(4): p. 315-323.
3. Chris C. Baum, Robert A. Soper, Stephen Ferrer, and J Leon Shoher. Scatterometry for Post-etch Polysilicon Gate Metrology. in SPIE Metrology, inspection and Process control for monolithography. 1999.
4. J. Allgair, Dave Benoit, Rob Hershey, Lloyd C Litt de Motorola. Pedro Herrera, Umar Whitney, Marco Guevrenmont, Ady Levy, Suresh Lakkapragada de KLA Tencor. Implementation of Spectroscopic Critical Dimension for gate CD Control and Stepper Characterization,. in SPIE Metrology, inspection and Process control for monolithography. 2001.

Revendications

1. Dispositif pour la mesure de caractéristiques dimensionnelles et/ou structurelles d'un objet, comportant :

   - des moyens (2) pour former une image de la transformée de Fourier optique d'une surface élémentaire de l'objet dans un plan focal image de Fourier,
   - des moyens (10, 12) de transfert pour former l'image de la transformée de Fourier optique de la surface élémentaire sur des moyens (14) de détection,
   - des moyens (16) pour définir la géométrie de ladite surface élémentaire,
   - des moyens (26) de traitement pour produire des données concernant au moins une caractéristique dimensionnelle et/ou structurelle de l'objet, ou pour identifier une telle caractéristique, à partir d'informations fournies par les moyens de détection, ces moyens de traitement des données adaptés pour effectuer un calcul d'une distribution d'intensité réfléchie théorique, pour une lumière incidente donnée et des caractéristiques dimensionnelles et/ou structurelles données de l'objet, puis pour comparer cette distribution théorique avec une distribution d'intensité réfléchie mesurée.

2. Dispositif selon la revendication 1, comportant en outre des moyens (14) de détection.

3. Dispositif selon la revendication 1 ou 2, les moyens (16) pour définir la géométrie de la surface élémentaire comportant un diaphragme.

4. Dispositif selon la revendication 3, le diaphragme ayant une ouverture de diamètre compris entre 40 $\mu$m et 500 $\mu$m.

5. Dispositif selon l'une des revendications 1 à 4, comportant en outre une source (24) de rayonnement pour réaliser une illumination d'une surface élémentaire de l'objet.

6. Dispositif selon la revendication 5, la source de rayonnement étant à faible cohérence spatiale.

7. Dispositif selon la revendication 5 ou 6, la source (24) de rayonnement étant de puissance comprise entre 100 mW et 500 mW.

**8.** Dispositif selon l'une des revendications 5 à 7, la source (24) de rayonnement étant de faible largeur spectrale.

**9.** Dispositif selon la revendication 8, la source de rayonnement étant de largeur spectrale inférieure ou égale à 10 nm.

**10.** Dispositif selon l'une des revendications 5 à 9, l'illumination d'une surface élémentaire de l'objet se faisant à partir d'un plan de Fourier.

**11.** Dispositif selon l'une des revendications 1 à 10, comportant en outre des moyens (30, 40, 50) pour illuminer de manière sélective la surface de l'objet.

**12.** Dispositif selon la revendication 11, les moyens pour illuminer de manière sélective comportant un masque (40) présentant une fente radiale (42).

**13.** Dispositif selon la revendication 11, les moyens pour illuminer de manière sélective comportant un masque (50) présentant une fente (52) en arc de cercle.

**14.** Dispositif selon la revendication 13, la fente permettant une illumination selon un arc angulaire de 180°.

**15.** Dispositif selon l'une des revendications 1 à 14, les moyens (26) de traitement mettant en oeuvre un calcul RCWA.

**16.** Dispositif selon l'une des revendications 1 à 15, les moyens de traitement des données effectuant une modification des caractéristiques dimensionnelles et/ou structurelles données de l'objet si le résultat de la comparaison n'est pas satisfaisant.

**17.** Dispositif selon l'une des revendications 1 à 16, la géométrie de la surface élémentaire étant définie de manière indépendante de l'ouverture numérique des moyens (2) pour former l'image de la transformée de Fourier optique.

**18.** Procédé de mesure de caractéristiques dimensionnelles et/ou structurelles d'un objet ayant une surface dont au moins une partie, ou une surface élémentaire, est illuminée par un rayonnement, comportant :

- former l'image de la transformée de Fourier optique de ladite partie illuminée de la surface dans un plan focal image de Fourier,
- transférer cette image sur des moyens de détection,
- traiter des données fournies par les moyens de détection de manière à produire au moins une donnée concernant au moins une caractéristique dimensionnelle et/ou structurelle de l'objet, les données fournies par les moyens de détection étant traitées pour identifier au moins une caractéristique dimensionnelle et/ou structurelle de l'objet examiné, le traitement des données effectuant un calcul d'une distribution d'intensité réfléchie théorique, pour une lumière incidente donnée et des caractéristiques dimensionnelles et/ou structurelles données de l'objet, puis une comparaison de cette distribution théorique avec une distribution d'intensité réfléchie mesurée.

**19.** Procédé selon la revendication 18 l'objet étant un réseau monodimensionnel ou bidimensionnel ou une couche simple ou un empilement de couches ou un empilement de couches comportant en outre au moins un réseau mono ou bipériodique ou une membrane biomimétique, ou comportant au moins deux réseaux superposés avec un décalage latéral.

**20.** Procédé selon la revendication 18, l'objet étant un réseau de largeur de ligne comprise entre, d'une part, 10 nm ou 50 nm et, d'autre part, $1\mu$m ou $10\mu$m.

**21.** Procédé selon la revendication 18, l'objet étant une monocouche d'épaisseur comprise entre, d'une part, 10 nm ou 50 nm et, d'autre part, 1 $\mu$m ou 10 $\mu$m ou 100 $\mu$m.

**22.** Procédé selon l'une des revendications 18 à 21, la surface de l'objet étant illuminée avec une source de rayonnement de puissance comprise entre 100 mW et 500 mW.

**23.** Procédé selon l'une des revendications 18 à 22, la surface de l'objet étant illuminée de manière sélective.

**24.** Procédé selon la revendication 23, la surface de l'objet étant illuminée de manière sélective angulairement.

**25.** Procédé selon l'une des revendications 18 à 24, la partie illuminée de la surface de l'objet ayant une dimension maximale ou un diamètre, dans le plan de cette surface, inférieur à 500 μm.

**26.** Procédé selon l'une des revendications 18 à 25, la surface de l'objet étant éclairée sous une direction azimutale variable.

**27.** Procédé selon l'une des revendications 18 à 26, le traitement des données mettant en oeuvre un calcul RCWA.

**28.** Procédé selon l'une des revendications 18 à 27, le traitement des données effectuant une modification des caractéristiques dimensionnelles et/ou structurelles données de l'objet si le résultat de la comparaison n'est pas satisfaisant.

**29.** Procédé selon l'une des revendications 18 à 28, l'image formée sur les moyens de détection comportant au moins une composante d'ordre 0.

**30.** Procédé selon la revendication précédente, l'image formée sur les moyens de détection comportant en outre au moins une composante d'un autre ordre.

**31.** Procédé selon l'une des revendications 18 à 30, l'illumination d'une surface élémentaire de l'objet se faisant à partir d'un plan de Fourier.

**32.** Procédé selon l'une des revendications 18 à 31, la géométrie de la surface élémentaire de l'objet étant définie de manière indépendante de l'ouverture numérique utilisée pour former l'image de la transformée de Fourier optique.

**Patentansprüche**

**1.** Vorrichtung zum Messen von maßlichen und/oder strukturellen Eigenschaften eines Gegenstands, enthaltend:

- Einrichtungen (2) zum Bilden eines Bildes der optischen Fourier-Transformierten einer elementaren Oberfläche des Gegenstands in einer Fourier-Bildfokusebene,
- Übertragungseinrichtungen (10, 12) zum Bilden des Bildes der optischen Fourier-Transformierten der elementaren Oberfläche auf Detektionseinrichtungen (14),
- Einrichtungen (16) zum Definieren der Geometrie der elementaren Oberfläche,
- Verarbeitungseinrichtungen (26) zum Erzeugen von Daten zumindest bezüglich einer maßlichen und/oder strukturellen Eigenschaft des Gegenstands oder zum Identifizieren einer solchen Eigenschaft ausgehend von Informationen, die von den Detektionseinrichtungen geliefert werden, wobei diese Einrichtungen zum Verarbeiten der Daten dazu ausgelegt sind, eine Berechnung einer theoretischen reflektierten Intensitätsverteilung bei einem gegebenen Lichteinfall und bei gegebenen maßlichen und/oder strukturellen Eigenschaften des Gegenstands durchzuführen, um dann diese theoretische Verteilung mit einer gemessenen reflektierten Intensitätsverteilung zu vergleichen.

**2.** Vorrichtung nach Anspruch 1, ferner enthaltend Detektionseinrichtungen (14).

**3.** Vorrichtung nach Anspruch 1 oder 2, wobei die Einrichtungen (16) zum Definieren der Geometrie der elementaren Oberfläche eine Blende enthalten.

**4.** Vorrichtung nach Anspruch 3, wobei die Blende eine Öffnung mit einem Durchmesser zwischen 40 μm und 500 μm hat.

**5.** Vorrichtung nach einem der Ansprüche 1 bis 4, ferner enthaltend eine Strahlungsquelle (24) zum Erzeugen einer Ausleuchtung einer elementaren Oberfläche des Gegenstands.

**6.** Vorrichtung nach Anspruch 5, wobei die Strahlungsquelle eine geringe räumliche Kohärenz hat.

**7.** Vorrichtung nach Anspruch 5 oder 6, wobei die Strahlungsquelle (24) eine Leistung zwischen 100 mW und 500 mW hat.

8. Vorrichtung nach einem der Ansprüche 5 bis 7, wobei die Strahlungsquelle (24) eine geringe spektrale Breite hat.

9. Vorrichtung nach Anspruch 8, wobei die Strahlungsquelle eine spektrale Breite kleiner oder gleich 10 nm hat.

10. Vorrichtung nach einem der Ansprüche 5 bis 9, wobei die Ausleuchtung einer elementaren Oberfläche des Gegenstands ausgehend von einer Fourier-Ebene erfolgt.

11. Vorrichtung nach einem der Ansprüche 1 bis 10, ferner enthaltend Einrichtungen (30, 40, 50) zum Ausleuchten der Oberfläche des Gegenstands in selektiver Weise.

12. Vorrichtung nach Anspruch 11, wobei die Einrichtungen zum selektiven Ausleuchten eine Maske (40) enthalten, die einen radialen Schlitz (42) aufweist.

13. Vorrichtung nach Anspruch 11, wobei die Einrichtungen zum selektiven Ausleuchten eine Maske (50) enthalten, die einen kreisbogenförmigen Schlitz (52) aufweist.

14. Vorrichtung nach Anspruch 13, wobei der Schlitz eine Ausleuchtung in einem Winkelbogen von 180° gestattet.

15. Vorrichtung nach einem der Ansprüche 1 bis 14, wobei die Verarbeitungseinrichtungen (26) eine RCWA-Berechnung durchführen.

16. Vorrichtung nach einem der Ansprüche 1 bis 15, wobei die Datenverarbeitungseinrichtungen eine Änderung der gegebenen maßlichen und/oder strukturellen Eigenschaften des Gegenstands durchführen, falls das Ergebnis des Vergleichs nicht zufriedenstellend ist.

17. Vorrichtung nach einem der Ansprüche 1 bis 16, wobei die Geometrie der elementaren Oberfläche in einer von der numerischen Apertur der Einrichtungen (2) zum Bilden des Bildes der optischen Fourier-Transformierten unabhängigen Art und Weise definiert wird.

18. Verfahren zum Messen der maßlichen und/oder strukturellen Eigenschaften eines Gegenstands mit einer Fläche, von der zumindest ein Teil bzw. eine elementare Oberfläche mit einer Strahlung ausgeleuchtet wird, umfassend

    - Bilden des Bildes der optischen Fourier-Transformierten des ausgeleuchteten Teils der Oberfläche in einer Fourier-Bildfokusebene,
    - Übertragen dieses Bildes zu Detektionseinrichtungen,
    - Verarbeiten der von den Detektionseinrichtungen gelieferten Daten, so dass zumindest eine Information über zumindest eine maßliche und/oder strukturelle Eigenschaft des Gegenstands abgegeben wird, wobei die von den Detektionseinrichtungen gelieferten Daten verarbeitet werden, um zumindest eine maßliche und/oder strukturelle Eigenschaft des untersuchten Gegenstands zu identifizieren, wobei die Datenverarbeitung eine Berechnung einer theoretischen reflektierten Intensitätsverteilung bei einem gegebenen Lichteinfall und bei gegebenen maßlichen und/oder strukturellen Eigenschaften des Gegenstands durchführen, dann einen Vergleich dieser theoretischen Verteilung mit einer gemessenen reflektierten Intensitätsverteilung durchzuführen.

19. Verfahren nach Anspruch 18, wobei der Gegenstand ein monodimensionales oder bidimensionales Gitter oder eine einfache Schicht oder eine Stapelung von Schichten oder eine Stapelung von Schichten mit zumindest einem mono- oder biperiodischem Gitter oder eine biomimetische Membran ist oder zumindest zwei übereinanderliegende Gitter mit einem Seitenversatz aufweist.

20. Verfahren nach Anspruch 18, wobei der Gegenstand ein Gitter mit einer Linienbreite zwischen 10 nm bzw. 50 nm einerseits und 1 $\mu$m bzw. 10 $\mu$m andererseits ist.

21. Verfahren nach Anspruch 18, wobei der Gegenstand eine Monoschicht mit einer Dicke zwischen 10 nm bzw. 50 nm einerseits und 1 $\mu$m bzw. 10 $\mu$m oder 100 $\mu$m andererseits ist.

22. Verfahren nach einem der Ansprüche 18 bis 21, wobei die Oberfläche des Gegenstands mit einer Strahlungsquelle mit einer Leitung zwischen 100 mW und 500 mW ausgeleuchtet wird.

23. Verfahren nach einem der Ansprüche 18 bis 22, wobei die Oberfläche des Gegenstands in selektiver Weise ausgeleuchtet wird.

**24.** Verfahren nach Anspruch 23, wobei die Oberfläche des Gegenstands in winkelselektiver Weise ausgeleuchtet wird.

**25.** Verfahren nach einem der Ansprüche 18 bis 24, wobei der ausgeleuchtete Teil der Oberfläche des Gegenstands eine maximale Abmessung bzw. einen Durchmesser in der Ebene dieser Fläche hat, die bzw. der kleiner als 500 $\mu$m ist.

**26.** Verfahren nach einem der Ansprüche 18 bis 25, wobei die Oberfläche des Gegenstands unter einer variablen azimutalen Richtung beleuchtet wird.

**27.** Verfahren nach einem der Ansprüche 18 bis 26, wobei bei der Datenverarbeitung eine RCWA-Berechnung erfolgt.

**28.** Verfahren nach einem der Ansprüche 18 bis 27, wobei die Datenverarbeitung eine Änderung der gegebenen maßlichen und/oder strukturellen Eigenschaften des Gegenstands durchführen, falls das Ergebnis des Vergleichs nicht zufriedenstellend ist.

**29.** Verfahren nach einem der Ansprüche 18 bis 28, wobei das auf den Detektionseinrichtungen gebildete Bild zumindest eine Komponente nullter Ordnung aufweist.

**30.** Verfahren nach dem vorangehenden Anspruch, wobei das auf den Detektionseinrichtungen gebildete Bild ferner zumindest eine Komponente einer weiteren Ordnung aufweist.

**31.** Verfahren nach einem der Ansprüche 18 bis 30, wobei die Ausleuchtung einer elementaren Oberfläche des Gegenstands ausgehend von einer Fournier-Ebene erfolgt.

**32.** Verfahren nach einem der Ansprüche 18 bis 31, wobei die Geometrie der elementaren Oberfläche des Gegenstands in einer von der numerischen Apertur unabhängigen Art und Weise definiert wird, die zum Bilden des Bildes der optischen Fourier-Transformierten verwendet wird.

**Claims**

**1.** Device for measuring the dimensional and/or structural characteristics of an object, comprising:

- means (2) for forming an optical Fourier transform image of an elemental surface of the object in a Fourier image focal plane,
- transfer means (10, 12) for forming the optical Fourier transform image of the elemental surface on detection means (14),
- means (16) for defining the geometry of said elemental surface,
- processing means (26) for producing data relating to at least one dimensional and/or structural characteristic of the object, or for identifying such a characteristic, from information provided by the detection means, said processing means being adapted to calculate a theoretical reflected intensity distribution, for a given incident light and given dimensional and/or structural characteristics of the object, then to compare this theoretical distribution with a measured reflected intensity distribution.

**2.** Device according to claim 1, additionally comprising detection means (14).

**3.** Device according to claim 1 or 2, the means (16) for defining the geometry of the elemental surface comprising a diaphragm.

**4.** Device according to claim 3, the diaphragm having an aperture with a diameter of between 40 $\mu$m and 500 $\mu$m.

**5.** Device according to one of claims 1 to 4, additionally comprising a radiation source (24) for illuminating an elemental surface of the object.

**6.** Device according to claim 5, the radiation source having weak spatial coherence.

7. Device according to claim 5 or 6, the radiation source (24) having power of between 100 mW and 500 mW.

8. Device according to one of claims 5 to 7, the radiation source (24) being of small spectral width.

9. Device according to claim 8, the radiation source having a spectral width of less than or equal to 10 nm.

10. Device according to one of claims 5 to 9, an elemental surface of the object being illuminated from a Fourier plane.

11. Device according to one of claims 1 to 10, additionally comprising means (30, 40, 50) to illuminate the surface of the object selectively.

12. Device according to claim 11, the means for selective illumination comprising a mask (40) having a radial slot (42).

13. Device according to claim 11, the means for selective illumination comprising a mask (50) having a slot (52) in a circle arc.

14. Device according to claim 13, the slot allowing illumination along an angular arc of 180°.

15. Device according to one of claims 1 to 14, the processing means (26) employing an RCWA calculation.

16. Device according to one of claims 1 to 15, the data processing means modifying the given dimensional and/or structural characteristics of the object if the result of the comparison is not satisfactory.

17. Device according to one of claims 1 to 16, the geometry of the elemental surface being defined independently of the numerical aperture of the means (2) for forming the optical Fourier transform image.

18. Process for measuring dimensional and/or structural characteristics of an object that has a surface at least one part of which, or an elemental surface, is illuminated by radiation, comprising:

   - forming the optical Fourier transform image of said illuminated part of the surface in a Fourier image focal plane,
   - transferring this image to detection means,
   - processing the data provided by the detection means so as to produce at least one datum relating to at least one dimensional and/or structural characteristic of the object,
   the data provided by the detection means being processed to identify at least one dimensional and/or structural characteristic of the object examined, the processing of the data calculating a theoretical reflected intensity distribution, for a given incident light and given dimensional and/or structural characteristics of the object, then comparing this theoretical distribution with a measured reflected intensity distribution.

19. Process according to claim 18, the object being a one dimensional or two-dimensional grating or a single layer or layer stack or a layer stack additionally comprising at least one single or biperiodic grating or a biomimetic membrane, or comprising at least two superimposed gratings with a lateral offset.

20. Process according to claim 18, the object being a grating with a line width of between, on the one hand, 10 nm or 50 nm and, on the other hand, 1 $\mu$m or 10 $\mu$m.

21. Process according to claim 18, the object being a single layer with a thickness of between, on the one hand, 10 nm or 50 nm and, on the other hand, 1 $\mu$m or 10 $\mu$m or 100 $\mu$m.

22. Process according to one of claims 18 to 21, the surface of the object being illuminated with a radiation source with the power of between 100 mW and 500 mW.

23. Process according to any one of claims 18 to 22, the surface of the object being illuminated selectively.

24. Process according to claim 23, the surface of the object being illuminated selectively and angularly.

25. Process according to one of claims 18 to 24, the illuminated part of the surface of the object having a maximum dimension or a diameter, in the plane of this surface, of less than 500 $\mu$m.

**26.** Process according to one of claims 18 to 25, the surface of the object being lit up from a variable azimuthal direction.

**27.** Process according to one of claims 18 to 26, the data processing employing an RCWA calculation.

**28.** Process according to one of claims 18 to 27, the data processing modifying given dimensional and/or structural characteristics of the object if the result of the comparison is not satisfactory.

**29.** Process according to one of claims 18 to 28, the image formed on the detection means comprising at least one 0 order component.

**30.** Process according to the previous claim, the image formed on the detection means additionally comprising at least one component of another order.

**31.** Process according to one of claims 18 to 30, an elemental surface of the object being illuminated from a Fourier plane.

**32.** Process according to one of claims 18 to 31, the geometry of the elemental surface of the object being defined independently of the numerical aperture used to form the optical Fourier transform image.

**FIG. 1A**

**FIG. 1B**

**FIG. 2A**

**FIG. 2B**

FIG. 3

S $(\Theta, \varphi)$

S1

54

56

R $(\Theta, \varphi)$ THEORIQUE

R $(\Theta, \varphi)$ MESURE

PARAMETRES DE STRUCTURE

MODIFICATION DES PARAMETRES

NON

COMPARAISON

S2

S4

OUI

S3

CARACTERISTIQUES STRUCTURELLES DE L'OBJET

60

EP 1 682 879 B1

FIG. 4

FIG. 5A

FIG. 5B

FIG. 6A

FIG. 6B

FIG. 6C

FIG. 7A

FIG. 7B

FIG. 7C

FIG. 8A

FIG. 8B

FIG. 8C

FIG. 9A

FIG. 9B

FIG. 10A

FIG. 10B

FIG. 11A

FIG. 11B

FIG. 12A

FIG. 12B

FIG. 12C

FIG. 13A

FIG. 13B

FIG. 13C

## RÉFÉRENCES CITÉES DANS LA DESCRIPTION

**Documents brevets cités dans la description**

- FR 2749388
- FR 2613830
- US 6020957 A
- US 5428442 A
- US 4735487 A
- US 5241369 A
- US 5880845 A

**Littérature non-brevet citée dans la description**

- **M. G. MOHARAM ; T. K GAYLORD ; ERK B. GRANN ; DREW A. POMMET.** Formulation for stable and efficient implementation of the rigourous coupled-wave analysis of binary gratings. *Journal Optical Society of America,* 1995, vol. 12 (5), 1068-1076
- **M. NEVIÈRE ; E. POPOV.** Grating Electromagnetic Theory User Guide. *Journal of imaging science and technology,* 1997, vol. 41 (4), 315-323
- **CHRIS C. BAUM ; ROBERT A. SOPER ; STEPHEN FERRER ; J LEON SHOHER.** Scatterometry for Post-etch Polysilicon Gate Metrology. *SPIE Metrology, inspection and Process control for monolithography,* 1999
- **J. ALLGAIR ; DAVE BENOIT ; ROB HERSHEY ; LLOYD C LITT DE MOTOROLA ; PEDRO HERRERA ; UMAR WHITNEY.** Marco Guevrenmont, Ady Levy, Suresh Lakkapragada de KLA Tencor. Implementation of Spectroscopic Critical Dimension for gate CD Control and Stepper Characterization. *SPIE Metrology, inspection and Process control for monolithography,* 2001